# EUROPEAN PATENT SPECIFICATION

(11) **EP 4 536 473 B1**
(45) Date of publication and mention of the grant of the patent: **13.05.2026**
(21) Application number: 23742133.4
(22) Date of filing: 07.06.2023
(51) Int. Cl.: B32B 1/08, B32B 5/02, B32B 25/08, B32B 25/14, B32B 27/34

(54) **LOW EXTRACTION HNBR MATERIAL WITH ADHESION TO POLYAMIDES**
HNBR-MATERIAL MIT GERINGER EXTRAKTION MIT HAFTUNG AN POLYAMIDEN
MATÉRIAU HNBR À FAIBLE EXTRACTION PRÉSENTANT UNE ADHÉRENCE À DES POLYAMIDES

(30) Priority: 08.06.2022 US 202263350100 P
(43) Date of publication of application: 16.04.2025
(73) Proprietor: Danfoss A/S, 6430 Nordborg (DK)
(72) Inventor: CLARK, Aaron David, Lambertville, Michigan 48144 (US); CLARK, Gina Theresa, Lambertville, Michigan 48144 (US); HATHAWAY, Colleen Marie, Dundee, Michigan 48131 (US)
(74) Representative: Keil & Schaafhausen Patentanwälte PartGmbB
(86) International application number: PCT/IB2023/055890
(87) International publication number: WO 2023/238066

(56) References cited:
- EP-A1- 3 047 187
- EP-A1- 3 604 420
- US-A1- 2016 376 421
- SANG JING ET AL: "Hybrid joining of polyamide and hydrogenated acrylonitrile butadiene rubber through heat-resistant functional layer of silane coupling agent", APPLIED SURFACE SCIENCE, ELSEVIER, AMSTERDAM , NL, vol. 412, 30 March 2017 (2017-03-30), pages 121 - 130, XP029988038, ISSN: 0169-4332, DOI: 10.1016/J.APSUSC.2017.03.254

## Description

### CROSS-REFERENCE TO RELATED APPLICATION

### BACKGROUND

In many multilayer hose designs comprising a barrier or veneer layer, an external epoxy or acrylic glue is applied in the production process to adhere the various layers together. These glues or cements may have sporadic coverage in these applications, constitute a messy process, and may contain Substances of Very High Concern (SVHC) ingredients such as bisphenol A.

Improved processes and hose designs which remove the hazards associated with glue adhesives, eliminate a cumbersome process step, and dramatically improve the quality of the adhesion layer and overall hose performance are desirable. SANG JING et. al. "Hybrid joining of polyamide and hydrogenated acrylonitrile butadiene rubber through heat-resistant functional layer of silane coupling agent", APPLIED SURFACE SCIENCE, ELSEVIER, AMSTERDAM , NL, vol. 412, 30 March 2017 (2017-03-30) discloses a method to provide a fuel hose comprising a HNBR layer directly bonded to a polyamide barrier layer without applying adhesives, wherein good adhesion between said layers is obtained by the use of a silane coupling agent.

### SUMMARY

The present disclosure relates to a novel rubber formulation specifically designed for fluid conveyance fuel and air conditioning hoses, particularly designs that implement a thermoplastic barrier or veneer layer. This thermoset rubber is hydrogenated nitrile rubber (HNBR) based with a specific peroxide cure system that facilitates strong covalent linkages to polyamide thermoplastic without an intervening adhesive layer. The present technology enables the finished composite to have very low permeation.

A hydrogenated nitrile butadiene rubber (HNBR) formulation that is peroxide cured, and that generates strong and consistent adhesion to polyamide thermoplastics during the vulcanization process without the need for glue adhesives is provided. The HNBR formulation is designed with very low volatile ingredients to help avoid any residue extraction in the application that might foul downstream components. The HNBR formulation may be employed in preparation of a tube layer or a backing layer in a fuel hose or refrigerant hose.

Hydrogenated nitrile rubber (HNBR) is a synthetic compound prepared by hydrogenation of nitrile rubber (NBR). The hydrogenation process allows for enhanced thermal stability up to about 150 °C. HNBR may also improve fluid compatibility over NBR.

In some examples, a 99% saturated hydrogenated nitrile rubber (HNBR) peroxide cure composition is provided including components comprising maleic anhydride and malemide functionalities to generate robust covalent linkages to the N terminal amine and/or the carbon backbone of a polyamide thermoplastic resin. The HNBR composition contains very low extractible content (waxes and plasticizers) to limit the available residue that can be extracted and later create an obstruction with a valve or other downstream component. Applications for this invention include barrier or veneer style fuel or air conditioning hoses that use a material such as a polyamide as a gas or fluid permeation barrier layer.

A hose is provided comprising a multiplicity of layers including a hydrogenated nitrile butadiene (HNBR) rubber layer directly bonded to a polyamide (PA) barrier layer, wherein the HNBR rubber layer is prepared from a first composition comprising an HNBR rubber, a phenylenedimaleimide, and a maleated compound. The first composition may further comprise a peroxide. The first composition may further comprise one or more fillers. The first composition may further comprise a high molecular weight plasticizer. The first composition may further comprise an antioxidant. Upon vulcanization, the HNBR layer of the hose may be covalently bonded to a polyamide layer without an intervening adhesive layer.

The HNBR rubber may be at least partially saturated having residual double bonds of no more than 6%, no more than 4%, no more than 2%, or no more than 1% by Infrared (IR) Spectroscopy. The first composition may comprise the HNBR rubber in a range of from 20-60 wt%, 30-55 wt%, or 35-45 wt% compared to the total weight of the first composition.

In some examples, the first composition comprises a phenylenedimaleimide that is a N,N'-1,3-phenylenedimaleimide. The first composition may comprise the phenylenedimaleimide in a range of from 0.1-5.0 wt%, 0.5-4.0 wt%, 0.8-3.0 wt%, or 1-2 wt% compared to the total weight of the first composition.

In some examples, the first composition comprises a maleated compound that is a maleated polybutadiene compound. The first composition may comprise the maleated compound in a range of from 1-7 wt%, 2-6 wt%, 3-5 wt%, or 3.5-4.5 wt% compared to the total weight of the first composition.

The first composition may further comprises a plasticizer, optionally wherein the plasticizer is a high molecular weight plasticizer (> 500 g/mol). The high molecular weight plasticizer may have low volatility. The plasticizer may be a tri- C₆₋₁₂ alkyl trimellitate. The first composition may comprise the plasticizer in a range of from 0-25 wt%, 0.1-20 wt%, 3-15 wr%, 5-15 wt%, or 7-10 wt% compared to entire wt of the first composition.

The first composition may comprise one or more fillers. In some examples, the one or more filers may be selected from the group consisting of carbon black, silica, silicates, talc, aluminum silicate, calcium carbonate, zinc oxide, titanium dioxide, and stearic acid. The first composition may comprise the one or more fillers in a total amount in a range of from 30-60 wt%, 35-55 wt%, or 35-45 wt% compared to the total weight of first composition.

The first composition may comprise a peroxide. The peroxide may be selected from the group consisting of dicumyl peroxide, di-t-butyl peroxide, and t-butyl cumyl peroxide.

The present disclosure provides a hose comprising an innermost HNBR tube layer. A hose is provided comprising in a radial direction: an inner HNBR tube layer prepared from an HNBR rubber composition; a polyamide barrier layer; a rubber backing layer; and a braided reinforcement cover layer.

The present disclosure provides a hose comprising an HNBR backing layer. A hose is provided comprising the following layers in a radial direction: an inner polyamide veneer; an HNBR rubber backing layer prepared from the first composition; a braided reinforcement layer; and an outer rubber cover layer.

The polyamide layer may comprise a polyamide selected from the group consisting of PA 6,6; PA 6,6, PA 12, PA 11, or a blend thereof.

In some hose configurations, the rubber backing layer may be an EPDM rubber backing layer prepared from a second composition comprising a low ethylene EPDM rubber, a phenylenedimaleimide, and a maleated compound. The second compositions may comprise one or more fillers, a paraffinic plasticizer, and a peroxide. After vulcanization, the EPDM rubber backing layer may be covalently bonded to the polyamide barrier layer without an intervening adhesive layer. The braided reinforcement layer may comprise a polyester, aramid, polypropylene, glass, nylon, cotton, rayon yarns, or blends thereof.

The vulcanized hose according to the disclosure can exhibit one or more, or two or more of the following characteristics: a working temperature range of from - 40 to +301 deg F; a maximum working pressure of at least 500 psi; a burst rating of at least 4:1 under SAE J1527 burst test conditions; does not exceed a permeation rating of 15 g or less of fuel loss per square meter of interior surface area in 24 hours, 15g/m²/24 h, with CE fuel at 23°C as specified in SAE J1527-B1; does not exceed a permeation rating of 15 g or less of fuel loss per square meter of interior surface area in 24 hours, 15g/m²/24 h, with E85 fuel at 40°C as specified in SAE 30R9; does not exceed a permeation rating of 15 g or less of fuel loss per square meter of interior surface area in 24 hours, 15g/m²/24 h, with fuel C at 40°C as specified in SAE 30R9; exhibits a permeation rate of no more than 5g/m²/24 h, with E85 fuel; exhibits a permeation rate of no more than 4g/m²/24 h, with fuel C; conforms to SAE J30R9 requirements for a fuel injection hose; and conforms to SAE J1527 requirements for a marine fuel hose.

A method of making a hose is provided, the method comprising blending an HNBR rubber, a phenylenedimalemide, and a maleated compound to prepare a first composition; extruding the first composition onto a mandrel to form an HNBR inner tube layer; extruding a polyamide composition over the HNBR inner tube layer to form a barrier layer; blending a second composition comprising an ethylene propylene diene monomer rubber (EPDM), a phenylenedimalemide, and a maleated compound; extruding the second composition on top of the polyamide barrier layer to form an EPDM rubber backing layer; applying a textile braid reinforcement layer over the EPDM rubber backing layer to form a green hose; vulcanizing the green hose; and expelling the hose from the mandrel.

### BRIEF DESCRIPTION OF THE DRAWINGS

FIG. 1 shows a cutaway view of an exemplary barrier hose construction.
FIG. 2 shows a cutaway view of an exemplary veneer hose construction.
FIG. 3 shows a schematic drawing of an extrusion system used to make the tube layer according to an embodiment.

### DETAILED DESCRIPTION

Current multilayer hose production processes typically employ steps of applying acrylic- or epoxy- based adhesives directly onto the layers for adhesion. This is true particularly for hoses comprising a barrier or veneer layer. Adhesive application steps are cumbersome and messy and generate modest adhesive coverage to the product. Additionally, there are EHS implications from the use of these adhesives based on SVHC release of, for example, Bisphenol A fumes during processing.

The present disclosure provides improved multilayer hoses and manufacturing methods without applying acrylic- or epoxy- based adhesives directly onto the layers for adhesion.

A low extraction, peroxide cured HNBR thermoset rubber formulation is provided that directly bonds to polyamide thermoplastic during the vulcanization step without the need of external glue adhesive application. This can be applied to barrier or veneer style fuel or air conditioning hoses that use a material such as a polyamide as a gas or fluid permeation barrier layer.

### Definitions

As used herein, the terms "a" or "an" are defined as singular or plural.

A "barrier hose" is a multilayer hose having an internal barrier layer to prevent fluid (e.g., refrigerant) leakage through its walls. The barrier layer may comprise, for example, a polyamide. The barrier layer is not the innermost layer.

A "veneer hose" is a multilayer hose comprising an innermost veneer to prevent fluid (e.g., refrigerant) leakage through its walls. The innermost veneer may comprise, for example, a polyamide. The veneer may comprise one or more, or two or more veneer layers.

As used herein, the term "about" means within ten percent (10%) of the given value, either ten percent more than the given amount or ten percent less than the given amount, or both.

As used herein, the term "composition" refers to one or more of a compound, mixture, blend, alloy, polymer and/or copolymer.

The term "permeation rating" refers to the quantity of fuel which will pass through the walls of the hose when filled with fuel. In some embodiments, a fuel hose is provided that does not exceed a permeation rating of 15 g or less of fuel loss per square meter of interior surface area in 24 hours, 15g/m²/24 h, with CE fuel at 23°C as specified in SAE J1527-B1 for marine fuel hose. In some embodiments, a fuel hose is provided that does not exceed a permeation rating of 15 g or less of fuel loss per square meter of interior surface area in 24 hours, 15g/m²/24 h, as specified in SAE J309 for a fuel injection hose at 104 deg F (40 deg C) for gasoline, ethanol extended gasoline, diesel fuel, biodiesel (B5, B10, B20), lubrication oil. Fuel C is a testing fuel used for determining permeation and resistance properties. Fuel C comprising about 50% isooctane and about 50% toluene. E85 gas is a combination of ethanol and gasoline that contains ~51-83% ethanol blended with gasoline.

The term "FBU" hose refers to a flexible hose having an NR/BR tube, textile wrapped reinforcement, with a CR fire resistant cover. An FBU hose may have a temperature range of -40 C to +70C.

The term "safety factor" or "burst rating" may refer to a minimum burst pressure divided by the maximum working pressure of a hose. For example, a hose having a 4:1 safety factor may have a burst pressure 4X the maximum working pressure. Burst testing may be performed under SAE J1527 burst test conditions.

As provided herein, ranges are intended to include, at least, the numbers defining the bounds of the range. Terms such as "first" or "second" or other numerical terms do not imply a sequence or order unless clearly indicated.

One advantage of the inventive HNBR formulation versus other elastomers is the ability to directly bond to polyamide plastic during the vulcanization process without the use of adhesive glues. This helps enable the inventive hose to have significantly lower E85 and Fuel C permeation versus any known competitors. For example, the inventive hose exhibits a low permeation of 4. 5g/m²/day for E85 vs. competitive hose permeation values of 5.7 to 18.4g/m²/day for E85.

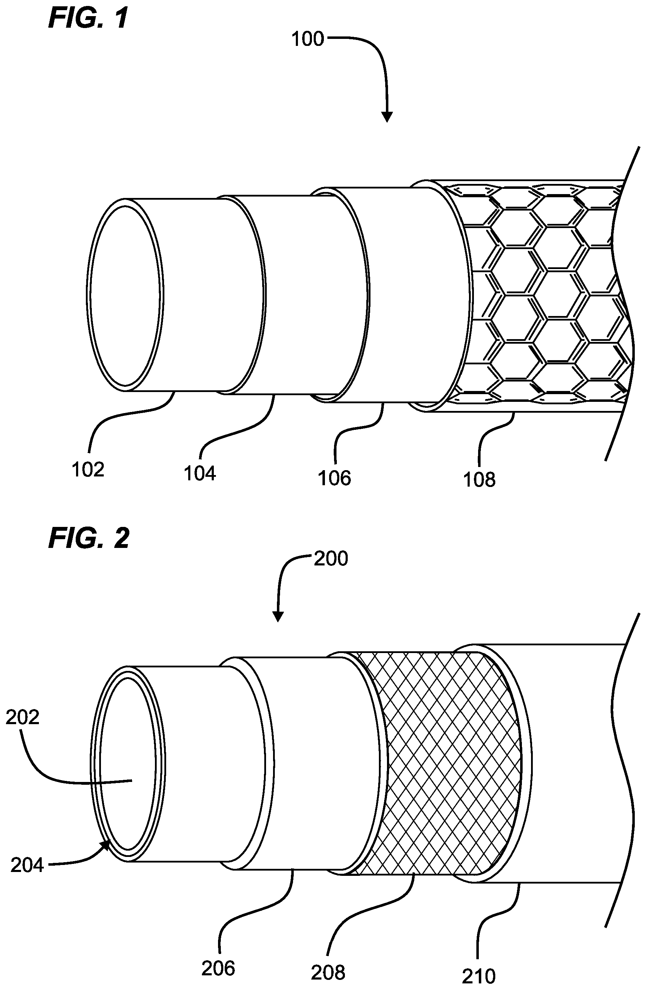

FIG. 1 shows an exemplary barrier hose construction 100 according to the present disclosure. A thermoset rubber inner tube layer 102 may be prepared from an HNBR composition according to the disclosure. A barrier tube layer 104 may be prepared from a polyamide composition. A rubber backing layer 106 may be prepared from an EPDM composition. A textile braid outer cover (reinforcement) layer 108 may be prepared from a polyester yarn.

The inner HNBR rubber tube layer 102 may be directly bonded to the polyamide barrier layer 104 without an intervening adhesive layer. The HNBR tube layer 102 can be prepared from an elastomeric HNBR composition comprising a blend of hydrogenated nitrile butadiene rubber (HNBR), N,N'-m-phenylenedimaleimide (HVA-2), and a maleated compound. The maleated compound may be a maleated polybutadiene. The phenylenedimaleimide may be N,N'-m-phenylenedimaleimide.

Obtained by hydrogenating the nitrile butadiene copolymer, HNBR has been developed to withstand continuous temperatures of up to 302 deg F (150 deg C) while retaining resistance to petroleum oils. HNBR was selected for use as the base rubber for use in preparation of the inner tube layer 102 of the hose for compatibility with Fuel C, E85, biodiesels, methanol, hot water, glycol, coolants such as R134a. The HNBR should be suitable for peroxide crosslinking. In some embodiments, the HNBR should be at least partially saturated having residual double bonds of no more than 6%, or no more than 4% by IR Spectroscopy. In some embodiments, the HNBR should be fully saturated having residual double bonds of no more than 1% by IR Spectroscopy. The HNBR rubber can be a 99% saturated HNBR. The HNBR may have an acrylonitrile content of about 34 wt% by ISO 24698-1. HNBR is commercially available, for example as THERBAN, for example, THERBAN 3407 from Arlanxeo Deutschland GmbH. The HNBR rubber composition may comprises the HNBR in a total amount in a range of from 20-60 wt%, 30-55 wt%, or 35-45 wt% compared to the total weight of the HNBR rubber composition.

The elastomeric HNBR composition allows for direct bonding to polyamide without an intervening adhesive layer upon vulcanization.

The rubber tube layer 102 and/or rubber backing layer 206 may be prepared from a composition comprising HNBR, phenylenedimaleimide, a maleated compound, and one or more each of plasticizers, fillers, vulcanizing agents, peroxides, and/or or antioxidants.

The rubber tube layer 102 may be prepared from an elastomeric composition that does not contain EPDM. In some examples, the rubber tube 102 and/or the rubber backing layer 206 may be prepared from an elastomeric composition that does not contain polyvinyl butyral (PVB). The rubber barrier tube 102 and/or the rubber backing layer 206 may be prepared from an elastomeric composition that does not contain polypropylene. The rubber tube layer 102 and/or the rubber backing layer 206 may be prepared from an elastomeric composition that does not contain a polyamide.

The term "maleated compound" as used herein refers to a compound having one or more, or two or more, maleic anhydride substituents. In some embodiments, the maleated compound is a maleated polybutadiene. The maleated polybutadiene can be a commercially available product, such as Ricobond^{™}, for example, Ricobond^{®} 1756 HS (powdered maleinized polybutadiene adducted with maleic anhydride, in a dispersion on amorphous silica, Cray Valley USA). The anhydride can bond with amino groups, while the vinyl functionality is peroxide curable. Maleimides may react via three principal pathways: radical addition to vinyl compounds, Michael addition with compounds having active hydrogens, and Diels-Alder reaction with dienes. For example, the maleic anhydride of the maleated compound may form a covalent bond with the polyamide N-terminal amine group (C-N bond) of the polyamide barrier layer 104, while the HVA-2 in the rubber tube layer 102 may form a covalent bond (C-C bond) with the carbon backbone. The HNBR rubber composition may comprises the maleated compound in a range of from 1-7 wt%, 2-6 wt%, 3-5 wt%, or 3.5-4.5 wt% compared to the total weight of the HNBR rubber composition.

The phenylenedimaleimide may be N,N'-m-phenylenedimaleimide. In some embodiments, the phenylenedimaleimide is N,N'-m-phenylenedimaleimide (CAS RN: 3006-93-7; N,N'-1,3-phenylenedimaleimide; HVA-2 curative, DuPont Chemical Co.). The HNBR rubber composition may comprises the phenylenedimaleimide in a total amount in a range of from 0.1-5.0 wt%, 0.5-4.0 wt%, 0.8-3.0 wt%, or 1-2 wt% compared to the total weight of the HNBR rubber composition.

In some embodiments, the inner tube layer 102 is prepared from a rubber composition comprising a hydrogenated nitrile butadiene rubber (HNBR) that further comprises fillers or other additives added to the HNBR rubber. The HNBR rubber composition may further comprise one or more fillers. For example, the one or more fillers may be selected from carbon black, silica, silicates, talc, aluminum silicate, calcium carbonate, zinc oxide, titanium dioxide, and stearic acid. In some embodiments, the HNBR rubber composition comprises the one or more fillers in a total amount in a range of from 30-60 wt%, 35-55 wt%, or 35-45 wt% compared to the total weight of the HNBR rubber composition.

Examples of fillers used in some embodiments include, for instance: zinc oxide, for example, calcium carbonate, for example Hubercarb Q325^{™} (ground calcium carbonate, Akrochem Corp.; Akron, Ohio); talc, for example Mistron^{®} vapor R (hydrous magnesium silicate, Imerys Talc), silica, for example HiSil 243 LD^{™} (precipitated amorphous silica from PPG Industries; Monroeville, Pa.); Kadox 930^{™} (zinc oxide, Zinc Corporation of America; Monaca, Pa.); carbon black, for example Continex^{™} N650 Carbon Black (carbon black, Continental Carbon; Houston, Texas), Vulcan^{®} XC72R (powdered carbon black, Cabot Corp.; Billerica, Mass.), and optionally silicates, aluminum silicate, titanium dioxide, and stearic acid.

The HNBR rubber composition may further comprise one or more plasticizers. The plasticizer may be a high molecular weight (> 500 g/ml) plasticizer having low volatility. For example, the HNBR composition may comprise a commercially available high molecular weight (>500 g/mol) plasticizer having low volatility. For example, the plasticizer may be a trialkyl trimellitate. The plasticizer may be a trialkyl C₆₋₁₂ trimellitate. The trialkyl_{C6-12} trimellitate may be, for example, tris(2-ethylhexyl) trimellitate, trin-octyl trimellitate, isodecyl diisooctyl mellitate, triisooctyl trimellitate, tri-heptyl trimellitate, tri-nonyl trimellitate, tri-nonyl trimellitate, tri-decyl trimellitate, or 1,2,4-benzene tricarboxylic acid branched isodecyl diisooctyl esters, and the like.

The high molecular weight (>500 g/mol) plasticizer may be, for example, tris(2-ethylhexyl) trimellitate (trioctyl trimellitate, TOTM) (M.W. 546.8 g/mol) having low volatility. TOTM is commercially available, for example, from Eastman Chemical Company. The HNBR rubber composition may further comprise one or more plasticizers in a total amount within a range of from 0-25 wt%, 0.1-20 wt%, 3-15 wr%, 5-15 wt%, or 7-10 wt% compared to entire wt of HNBR composition.

The HNBR rubber inner tube 102 is prepared from a composition comprising one or antioxidants. The antioxidant may be, for instance, a hydroquinoline antioxidant, for example, Agerite MA^{™} (2,2,4-trimethyl-1,2-dihydroquinoline polymer). The antioxidant may be, for instance, a phenol-phosphite antioxidant, such as Irgafos^{®} 168 (tris (2,4-di-tert-butylphenyl)phosphite, Ciba). When present, the HNBRrubber composition may comprise an antioxidant in a range of from 0.1 to 1.0 wt%, or 0.2 to 0.6 wt%.

The HNBR rubber inner tube 102 is prepared from a composition comprising one or more organic peroxides. Examples of peroxides used in some embodiments include, for instance: dicumyl peroxide, di-t-butyl peroxide, and t-butyl cumyl peroxide, and commercial products, such as Luperox^{™} DC40P-SP2 (dicumyl peroxide extended on calcium carbonate and silica, Arkema) or Varox^{®} DCP-99 (bis(1-methyl-1-phenylethyl) peroxide, R.T. Vanderbilt). In some embodiments, the composition comprises a dicumyl peroxide or t-butyl cumyl peroxide. In some embodiments, the composition comprises a dicumyl peroxide. In some embodiments, the peroxide is present at about 0.1 wt% to about 5 wt%; at about 1 wt% to about 4 wt%; at about 2 wt% to about 3 wt%; by total weight of the filled HNBR composition.

The HNBR rubber composition may have a Mooney viscosity in a range of 20 to about 40, about 25 to about 35, or about 30-32 MS(1+4) by ISO289/ASTM1646 at 100 deg C.

The HNBR rubber composition according to the disclosure may exhibit a T5 of at least 10 minutes, or at least about 12 minutes.

The cured HNBR rubber composition according to the disclosure may exhibit a percent elongation of at least 150%, or at least 175%.

The cured HNBR rubber composition according to the disclosure may exhibit a low extraction test result of no more than 0.1 g/m², no more than 0.05 g/m², or no more than 0.03 g/m². The cured HNBR rubber composition according to the disclosure may exhibit a hardness in a range of 70-90 Shore A.

The cured HNBR rubber composition according to the disclosure may exhibit a Die C tear strength of at least 170, at least 180, or at least 190 lbf/in.

The cured HNBR rubber composition according to the disclosure may exhibit a tensile strength of at least 2000 psi, or at least 2100 psi, or at least 2200 psi. The cured HNBR rubber composition according to the disclosure may exhibit a 100% modulus of at least 1200 psi, at least 1400 psi, or at least 1500 psi.

Upon vulcanization, the HNBR rubber tube layer 102 is strongly covalently bonded to the polyamide barrier layer 104. Strip adhesion test samples of the HNBR rubber tube layer bonded to the polyamide barrier layer exhibited adhesion between 30 lbf/in to 85 lbf/in; however, the value relates more to rubber tear strength since the two layers never actually separated.

The polyamide barrier layer 104 comprises a polyamide molding component that contains amide -CO-NH- bonds in its main chain and additives. In some embodiments, heat stabilized polyamide resins are suitable. Examples of suitable nylon polyamides may include PA 6 (polyamide 6; nylon 6), PA 6,6 (polyamide 6,6; nylon 6,6), PA 11 (polyamide 11, nylon 11), PA 12 (polyamide 12; nylon 12), PA 612 (polyamide 612; nylon 6,12), PA 46 (polyamide 46; nylon 46), and PA 610 (polyamide 610; nylon 6,10). In some embodiments, suitable nylon polyamides include PA 6, PA 6,6, PA 12 and PA 11. In still other embodiments, suitable nylon polyamides include PA 6 and PA 6,6. In yet other embodiments, suitable nylon polyamides include PA 6,6. In some embodiments, the polyamide layer 104 is prepared from a commercially available product, such as DuPont Zytel^{®} 45HSB PA 6,6. In some embodiments, the polyamide layer is a continuous layer. In some embodiments, the polyamide barrier layer 104 is prepared from a polyamide composition further comprising additives such as reinforcing agents, flameproofing agents, stabilizers, processing auxiliaries, blowing agents, metal fibers, carbon black, graphite and metal leaf, titanium dioxide, colored pigments and zinc sulfide.

In some embodiments, the hose comprises a multiplicity of layers including an HNBR rubber tube layer 102 directly bonded to a continuous polyamide barrier layer 104, without an intervening adhesive layer. The HNBR rubber tube layer 102 may be covalently bonded to a continuous polyamide barrier layer 104, without an intervening adhesive layer.

The rubber backing layer 106 may be directly bonded to the polyamide barrier layer 104 without an intervening adhesive layer. The rubber backing layer 106 may be prepared from a rubber backing composition comprising an EPDM rubber, a phenylenedimaleimide, and a maleated compound. The EPDM rubber backing layer 106 may be prepared from an EPDM rubber composition according to the method of U.S. 9,841,125, which is incorporated herein by reference. The maleated compound may be a maleated polybutadiene.

EPDM was selected for use in preparation of the rubber backing layer 106 of the hose in order to help maintain heat resistance upwards of 150°C while simultaneously maintaining the low temperature sealing capability (-40°C). The EPDM rubber may be a low ethylene EPDM having no more than about 60 wt% ethylene by ASTM D3900A.

With respect to a backing or insulation layer comprising EPDM, the EPDM ethylene content is a primary factor influencing compression set. As the ethylene content increases, a low-level of crystallinity develops above 55%-65%. If the ethylene/propylene ratio is about equal and the distribution of both monomers in the polymer chain is random then the EPDM is amorphous. Polymers with ethylene content above 60% tend to show high compression set, while the amorphous (less than 60% ethylene) materials provide decreased set values at low temperatures. The EPDM composition according to Table 3 comprises a low ethylene EPDM having an ethylene content of no more than 60% ethylene

The low ethylene EPDM may exhibit improved low temperature capability. In some embodiments, the backing layer 106 comprises a peroxide cured EPDM made with low ethylene content. In some embodiments, there is no adhesive between the EPDM backing layer 106 and the polyamide reinforcement layer 106. In some embodiments, there is no adhesive between the EPDM backing layer 106 and the reinforcement layer 108. The EPDM rubber may be present in the EPDM rubber composition in a range of from about 25 wt%-45 wt%, 30-40 wt%, or 33-37 wt% compared to the total weight of filled EPDM rubber backing composition.

The maleated compound may be present in the EPDM rubber composition in a range from about 0.1 wt % to about 15 wt%; 0.5 wt %- 10 wt %; or 3 wt % - 7 wt% compared to the total weight of filled EPDM rubber backing composition.

The phenylenedimaleimide may be present in the EPDM rubber composition at from about 0.1 wt%-5 wt %; 0.5 wt % -3 wt %; or 1.00 wt % - 1.75 wt% compared to the total weight of the filled EPDM rubber backing composition.

The EPDM rubber composition may include a plasticizer. The plasticizer may be a paraffinic process oil silicon dioxide blend plasticizer. The plasticizer may be present at from 2-20 wt%, 5-15 wt%, or 8-12 wt% compared to the total weight of the filled EPDM rubber backing composition.

The EPDM rubber composition may further comprise an antioxidant. The antioxidant may be, for instance, a hydroquinoline antioxidant, for example, Agerite MA^{™} (2,2,4-trimethyl-1,2-dihydroquinoline polymer). The antioxidant may be, for instance, a phenol-phosphite antioxidant, such as Irgafos^{®} 168 (tris (2,4-di-tert-butylphenyl)phosphite, Ciba). When present, the EPDM rubber composition may comprise an antioxidant in a range of from 0.1 to 1.0 wt%, or 0.2 to 0.6 wt%.

The EPDM rubber backing layer may be prepared from a rubber backing composition further comprising one or more fillers. In some embodiments, the rubber backing composition comprises one or more fillers selected from carbon black, silica, silicates, talc, aluminum silicate, calcium carbonate, zinc oxide, titanium dioxide and stearic acid. In some embodiments, the rubber backing composition comprises filler in an amount from about 30-60 wt%, 40-60 wt%, or 45-60 wt% compared to the total weight of the rubber backing composition.

In some embodiments, a hose is provided comprising a HNBR tube layer 102, a rubber backing layer 106 and a polyamide layer 104 wherein the rubber backing layer 106 is directly covalently bonded directly to the polyamide layer 104 without adhesive. In some embodiments, the rubber backing layer as provided herein, exhibits adhesion to a polyamide layer of greater than 10 lbf/in2, when tested according to ASTM D 413.

In some embodiments, the rubber backing composition does not contain a polyamide. In some embodiments, the rubber backing composition does not contain polyvinyl butyral.

In some embodiments, the rubber backing composition comprises an organic peroxide. The rubber backing layer 106 may be prepared from a rubber backing composition comprising an organic peroxide that is selected from dicumyl peroxide and t-butyl cumyl peroxide.

The hose according to the present disclosure may include a textile braided reinforcement cover layer 108. The reinforcing layer may be prepared by braiding, spiraling, knitting, or helical knitting of yarn. The yarn may be selected from polyester, aramid, polypropylene, glass, nylon, cotton, rayon yarns, or blends thereof. In some embodiments, the polyester yarn may be, for example, a polyethylene terephthalate or polyethylene naphthalate. The polyester yarn may be a high tenacity, continuous filament polyester yarn. The yarn may include a nylon resin to increase abrasion resistance. The nylon resin may be present at 3-5% liquid nylon in a polyester yarn.

In some embodiments, a hose is provided comprising an HNBR rubber tube layer 102 directly bonded to a polyamide barrier layer 104. The hose may comprise at least four layers arranged in the hose's radial direction from inside toward outer direction in the following order: an inner HNBR tube layer 102; a polyamide barrier layer 104; an EPDM rubber backing layer 106; and a braided cover reinforcement layer 108.

In some embodiments, the hose comprises a multiplicity of layers wherein a continuous polyamide plastic layer 104 is bonded directly to an EPDM rubber backing layer 106 without an intervening adhesive layer. The polyamide plastic layer 104 may be covalently bonded to an EPDM rubber backing layer 106 without an intervening adhesive layer.

The hose provided herein comprising an HNBR inner tube layer directly bonded to a continuous polyamide plastic layer without an intervening adhesive layer exhibits surprisingly improved properties including one or more of a Working Pressure of 500 psi (34.5 bar); a 4:1 burst rating; a working temperature range of 140 to 301 deg F (-40 to +150 deg C); a low permeation rating of < 15 kg/m2/yr; odorless; kink resistance; improved flexibility over FBU hose; tighter bend radii over competitive hoses; compatibility with gasoline, E85, diesel, biodiesel, and hot water; and be crimp and reusable fittings qualified.

FIG. 2 is an illustration of an exemplary veneer hose of the present disclosure, where the embodiment includes a hose 200 with a multiplicity of layers. In this example, the layers include a resistance layer 202, a polyamide layer 204, an HNBR rubber backing layer 206, a reinforcement layer 208, and cover layer 210. The rubber backing layer 206 may be prepared from a rubber backing composition comprising HNBR, a phenylenedimaleimide, and a maleated compound, as described in the present disclosure. The HNBR rubber backing composition allows for direct bonding to polyamide without an intervening adhesive layer upon vulcanization. In some embodiments, the rubber backing layer 206 is prepared from a composition comprising HNBR, phenylenedimaleimide, a maleated compound, and one or more each of fillers, plasticizers, vulcanizing agents, peroxides, and/or or antioxidants as described in the present disclosure.

The hose of FIG. 2 comprises an inner resistance layer 202 for resistance to moisture ingression and oils. In some embodiments, the resistance layer 202 is prepared from a composition comprising a polyamide. In specific embodiments, the resistance layer 202 is prepared from a composition comprising PA 6, PA 6,6, PA 6,12, PA 11, or PA 12. In some embodiments, PA 6 or PA 6,12 are used in the preparation of the resistance layer 202 because of their ability to directly bond to PA 6,6. In some embodiments, the resistance layer is a commercially available material, for example, DuPont Zytel^{®} FN727. In other embodiments, the resistance layer 202 is prepared from a fluorinated polymer. In some embodiments, the fluorinated polymer is, for example, polyvinylidene fluoride (PVDF). In some embodiments, the resistance layer 202 is used as an oil barrier. In some embodiments, the resistance layer 202 is from about 0.006" to about 0.01" thick; from about 0.007" to about 0.008" thick; from about 0.007" to about 0.009" thick; or from about 0.0065" to about 0.0085" thick.

In some embodiments, the resistance layer 202 and the polyamide layer 204 are formed by coextruding PA6 and PA 6,6 to form a plastic veneer.

In the hose of FIG. 2, the polyamide layer 204 and the HNBR rubber backing layer 206 are chemically covalently bonded together without the use of adhesive. In one embodiment, the rubber backing layer 206, prepared from a composition comprising HNBR, phenylenedimaleimide, and a maleated compound, that bonds directly to the polyamide layer 204 comprising nylon 6,6 upon cure.

Although the exact bonding mechanism between the layers is unclear, a possible bonding mechanism, which occurs through, for example, traditional press cure or extrusion processing methods exploits two different mechanisms. First, the MA might bond to the amine end of nylon 6,6 forming a C-N bond by Diels-Alder chemistry. Second, the cyclic carbon on the maleimide groups might form covalent C-C interactions to the nylon 6,6 backbone through an "Alder-ene" reaction using a free radical mechanism. In one embodiment, the polyamide layer 104 and the rubber backing layer 106 undergo shearing and vulcanization at a temperature of about 300-350°F.

The reinforcement layer 208 comprises a textile braid. The textile braid may be prepared from a polyester, nylon, cotton, aramid, or rayon yarn. In some embodiments, the reinforcement layer 208 is a discontinuous layer. In some embodiments, the reinforcement layer 208 is a discontinuous layer comprising a polyester braid, aramid, nylon, cotton, or rayon. In some embodiments, the cover layer 210 and the rubber backing layer 206, migrate through the interstices of the textile in the reinforcement layer 208 and vulcanize together.

The cover layer 210 has the largest outer diameter of the layers. In some embodiments, the cover layer 210 comprises a rubber, for example, EPDM. In some embodiments, the cover layer is prepared from a composition comprising an EPDM compound capable of maintaining a seal at low temperatures. In some embodiments the EPDM is made with low ethylene so it has low temperature capability. In some embodiments, the cover layer 210 comprises a peroxide cured EPDM made with low ethylene content. In some embodiments, there is no adhesive between the reinforcement layer 208 and the cover layer 210. In some embodiments, the hose comprises five layers.

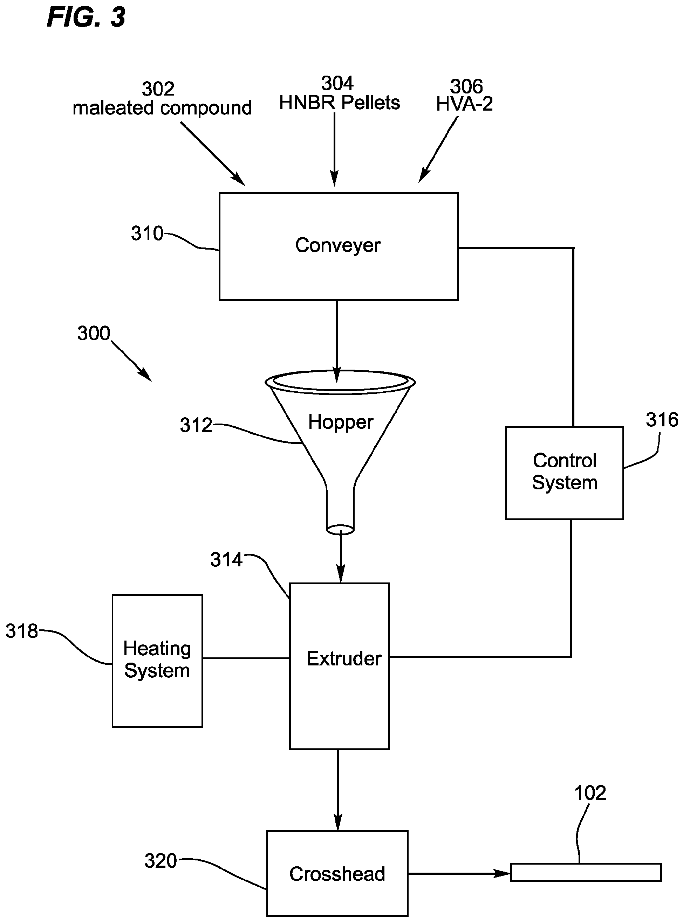

FIG. 3 shows a schematic drawing of an extrusion system 300 that may be used to make the tube layer 102 according to an embodiment. HNBR rubber pellets 304, a maleated compound 302, and a phenylenedimaleimide 306, may be moved via a conveyer 310 into a hopper 312 and blended. The blend is moved from the hopper 312 into the extruder and heated with a heating system 318. A control system 316 is employed to communicate between the conveyer 310 and the extruder 314. The heated blend is moved through a crosshead 320 and extruded onto a mandrel to form the HNBR tube 102.

A method of making a barrier hose is provided, the method comprising blending a first composition comprising an HNBR rubber, a phenylenedimalemide, and a maleated compound; extruding the first composition onto a mandrel to form an HNBR inner tube layer; extruding a polyamide composition over the inner tube layer to form a barrier layer; blending a second composition comprising an ethylene propylene diene monomer (EPDM), a phenylenedimalemide, and a maleated compound; extruding the second composition on top of the polyamide barrier layer to form an EPDM rubber backing layer; applying a textile braid reinforcement layer over the EPDM rubber backing layer to form a green hose; vulcanizing the green hose; and expelling the hose from the mandrel. The HNBR rubber is at least partially saturated having residual double bonds of no more than 6%, or no more than 4% by IR Spectroscopy. In some embodiments, the HNBR should be fully saturated having residual double bonds of no more than 1% by IR Spectroscopy. The first composition may further comprise a high molecular weight plasticizer. The first composition may further comprise one or more fillers. The first composition may be peroxide curable. The polyamide composition may comprise a PA 6,6, PA6, PA 12, PA 11 or a blend thereof. The EPDM composition may comprise a low ethylene EPDM. The textile braid may be formed from a yarn selected from polyester, aramid, polypropylene, nylon, cotton, rayon yarns, or any combination thereof.

The barrier hose according to the disclosure may exhibit a working temperature range of -40 to +301 deg F (-40 to + 150 deg C). The hose according to the disclosure may exhibit a working pressure of 400 psi or higher; 450 psi or higher; or 500 psi or higher. The hose according to the disclosure may exhibit a permeation rating for E85 of no more than 5.0 g/m2/day; or no more than 4.5 g/m2/day. The hose according to the disclosure may exhibit a permeation rating for Fuel C of no more than 4.0 g/m2/day; or no more than 3.6 g/m2/day. The fuel permeation test may be performed according to SAE J1527 Permeation Test as the highest 24 hour weight loss in grams during the test period. The hose according to the disclosure may meet or exceed SAE J30R9 rating requirements. The hose according to the disclosure may meet or exceed SAE J1527 rating requirements. In some embodiments, a low permeation fuel hose is provided that is CARB approved and conforms to parts of SAE J1527 and SAE J30 R9 specifications.

A method of making a veneer hose is provided comprising extruding two polyamides, e.g., PA6 and PA6,6, on mandrel to make veneer; extruding an HNBR backing layer on top of veneer; braiding a reinforcement layer over the backing layer; and extruding a cover layer over the braid to form a green hose; vulcanizing the green hose; and expelling the vulvanized hose from the mandrel.

### Test Methods

The rubber may be subjected to a Shore A hardness test. In accordance with ASTM D 2240-95, the hardness may be tested using a calibrated Instron automatic Durometer tester.

Compression set (C Set) is one of the primary characteristics of a rubber compound directing low temperature sealing capability. The compression set can be tested in accordance with ASTM D 395-89. The sample may be prepared as follows. First, the EPDM rubber is vulcanized for 60 minutes at 320°F into 0.49" thick by 1.14" diameter buttons. Then the buttons are compressed by 25% into a C Set fixture. After curing, the samples are exposed at -40°C for 24 hours and samples are removed and measured at specified time increments. The time versus percent compression may be plotted on a graph. The overall compression set may be assessed on a sample that is allowed to run a full 24 hours and then rebound at room temperature outside of the C Set fixture prior to the final measurement.

A strip adhesion test may be conducted in accordance with ASTM D 413-81. For example, this test measures the adhesion strength between various embodiments of the HNBR rubber tube layer with an embodiment of the polyamide layer. Specimen Type B - 90° peel was used. The sample is prepared using polyamide 6,6 injection molded samples that were 4" long, 1" wide, and 0.075" thick. The PA 6,6 samples were laid on top of rubber samples that were 4" long, 1" wide and 0.09" thick, on a standard press cure. The samples are vulcanized for 45 minutes at 320°F. Twenty-four hours after vulcanization, the samples are tested on a calibrated Instron 5965 (according to ASTM D413 Type B (90°C peel)) using a 5 KN (1,125 lbf) load cell at a rate of 2"/min.

Tensile strength and percent elongation may be tested in accordance with ASTM D 412. Standard ASTM samples can be tested on a calibrated Instron 5965 Testing System using a 5 KN load cell at a rate of 20"/min. Modulus of elasticity is the force at a specific elongation value, e.g., at 100% elongation. Expressed in pounds per square inch (psi) or megapascals (MPa).

The Die C Tear strength test may be conducted in accordance with ASTM D 624. This test measures resistance to tear initiation.

The scorch time (T5), is the time interval (measured from rotor start) corresponding to a viscosity increase of 5 Mooney units over MV, measured at rotor start. The T5 value indicates the prevulcanization tendency of the compound. In general, the larger the T5 value the lower the prevulcanization tendency and therefore the compound can be more reliably processed on extruder. T5 may be measured by ASTM D 1646 or ASTM D 2084.

The rubber extraction test can be performed by means of ISO1407:2011. Method A measures the mass of the solvent extract, after evaporation of the solvent, relative to the mass of the original test portion. Method B measures the difference in the mass of the test portion before and after extraction.

The Green Rubber Shelf Life test evaluates how the measurements changed over time. Samples are cured at time intervals over 3 months (45" at 320°F) from a standard uncured stock. Those samples undergo tests according to ASTM 412, ASTM D 2084-95, and ASTM D 413-81.

Refrigerant permeation of test hose and comparative product hoses can be tested in accordance with SAE J2064. Samples are stabilized for 24 hours at 23°C ± 2°C before testing and checked to ensure specified charge and identify charge loss.

### EXAMPLES

### Example 1. HNBR Rubber Composition

A direct bonding, low extraction rubber composition was developed for direct bonding to a barrier or veneer polyamide layer without a separate adhesive layer. HNBR was selected for use as the base rubber for compatibility with Fuel C, E85, biodiesels, methanol, hot water, glycol, and refrigerants such as R134a. The HNBR rubber composition was developed for use in preparation of an inner tube layer, for example, in a barrier hose, or for use in preparation of a backing layer, for example, in a veneer hose.

The following Example 1 HNBR composition was prepared according to the protocols above. The HNBR composition included HNBR that was a 99% saturated HNBR (Arlanxo Therban A3407), a phenylenedimaleimide, and a maleated polybutadiene.

**Table 1. Rubber Tube HNBR Composition A**

| Material | Ingredients | PHR | Wt % content |
|---|---|---|---|
| calcium carbonate | Hubercarb Q 325 | 15 | 5.94 |
| talc | MISTRON VAPOR R | 10 | 3.96 |
| zilicon dioxide, amorphous | HI-SIL 243 LD | 20 | 7.92 |
| zinc oxide | KADOX 930 (ZNO) | 5 | 1.98 |
| carbon black | N650 BLACK | 60 | 23.76 |
| antioxidant | AGERITE MA | 1 | 0.40 |
| phenylenedimaleimide | T(MPBM)D-70 (HVA-2) | 3 | 1.19 |
| maleated polybutadiene | RICOBOND 1756 HS | 10 | 3.96 |
| dicumyl peroxide | LUPEROX DCP-40P-SP2 | 6.5 | 2.57 |
| HNBR rubber | THERBAN A3407 | 100 | 39.60 |
| high M.W. plasticizer | Trioctyl trimellitate (TOTM) | 22.00 | 8.71 |
| | Totals: | 252.50 | 100 |

The HNBR composition A exhibited desirable characteristics upon cure, as shown in Table 2.

Using a moving die rheometer at 157°C, 0.5 Arc, 100 cpm, and 30 minutes, the rubber tube layer exhibited a T5 of 12.47 min; a Mooney viscosity of 31.62 MS (1+4); tensile strength of 2281.68 psi; elongation of 180.74 %; 10% Mod. of 374.7%; 100% Mod. of 1591.46 psi; harness of 82.4 pts A; Die C tear strength of 199.99 lbf/in; and an extraction test result of 0.02 g/m2.

**Table 2. HNBR Rubber Test Results**

| Test | Units | Results |
|---|---|---|
| Mooney | MS(1+4) | 31.62 |
| T5 | Min | 12.47 |
| Tensile strength | psi | 2281.68 |
| Elongation | % | 180.74 |
| 10% Mod. | psi | 374.7 |
| 100% Mod. | psi | 1591.46 |
| Hardness | pts A | 82.4 |
| Die C Tear | lbf/in | 199.99 |
| Extraction test | g/m2 | 0.02 g/m2 |

The tube layer prepared from HNBR composition A exhibited desirable direct bonding to polyamide 6,6 barrier layer, and multi-refrigerant/oil compatibility. Strip adhesion test samples of the HNBR rubber tube layer bonded to the polyamide barrier layer exhibited adhesion between 40 lbf/in2 to 70 lbf/in2 when tested according to ASTM D413; however, the value relates more to rubber tear strength since the two layers never actually separated.

### Example 2. EPDM Rubber Composition

A direct bonding rubber composition was desired for direct bonding to a polyamide layer without a separate adhesive layer. An EPDM rubber composition was prepared according to U.S. 9,841,125, which is incorporated herein by reference. The EPDM composition was employed for direct bonding to a polyamide layer.

**Table 3. Rubber Backing EPDM Composition B**

| Material | Ingredients | PPH | Wt % Content | Grams |
|---|---|---|---|---|
| EPDM rubber | Vistalon 2504 | 100.00 | 34.42 | 499.14 |
| calcium carbonate | Hubercarb Q 325 | 15.00 | 5.16 | 74.87 |
| talc | MISTRON VAPOR R | 10.00 | 3.44 | 49.91 |
| silicon dioxide, amorphous | HI-SIL 243 LD | 20.00 | 6.88 | 99.83 |
| paraffinic process oil silicon dioxide blend plasticizer | LUBSPAR 2280 (SUNPAR 2280) | 30.00 | 10.33 | 149.74 |
| zinc oxide | KADOX 930 | 5.00 | 1.72 | 24.96 |
| antioxidant | AGERITE MA | 1.00 | 0.34 | 4.99 |
| phenylenedimaleimide | T(MPBM)D-70 (HVA-2) | 3.00 | 1.03 | 14.97 |
| maleated polybutadiene | RICOBOND 1756 HS | 10.00 | 3.44 | 49.91 |
| carbon black | N650 BLACK | 90.00 | 30.98 | 449.23 |
| dicumyl peroxide | LUPEROX DCP-40P-SP2 | 6.50 | 2.24 | 32.44 |
| Totals: | | 290.5 | 100 | 1450 |

The EPDM composition B exhibited desirable characteristics upon cure. Using a moving die rheometer at 157°C, 0.5 Arc, 100 cpm, and 30 minutes, the rubber backing layer of Table 3 had a T5 of 5 min; a Mooney viscosity of 41MU; adhesion to polyamide greater than 10 lbf/in in strip adhesion test when tested according to ASTM D413; tensile strength 1,472 psi; elongation 148 %. In addition, the backing layer prepared from composition B exhibited desirable direct bonding to polyamide 6,6 veneer, and multi-refrigerant/oil compatibility.

### Example 3. Hose Construction and Tests

The hose according to the disclosure includes an HNBR inner tube layer 102; a polyamide barrier layer 104; an EPDM backing layer 106; and a textile braid reinforcement cover layer 108. Upon hose vulcanization, the HNBR tube layer 102 directly bonds to the polyamide barrier layer 104 and the EPDM cover layer directly bonds to the polyamide barrier layer 104.

The hose according to the disclosure may be prepared by blending a first composition according to Table 1 comprising an HNBR rubber, a phenylenedimalemide, and a maleated compound; extruding the first composition onto a mandrel to form an HNBR inner tube layer; extruding a polyamide composition over the inner tube layer to form a barrier layer; blending a second composition according to Table 3 comprising an ethylene propylene diene monomer (EPDM), a phenylenedimalemide, and a maleated compound; extruding the second composition on top of the polyamide barrier layer to form an EPDM rubber backing layer; applying a textile braid reinforcement layer over the EPDM rubber backing layer to form a green hose; vulcanizing the green hose; and expelling the hose from the mandrel.

A Banbury^{™} mixer (Farrel Corporation) can be used to mix the different rubber formulations as shown in Table 1 according to ASTM D 3182-07. First, the polymer was added first into the mixer in a 30 second mastication cycle at 150°C. Second, fillers and plasticizers were added in a 120 second mix cycle at 200°C. Then, process aids, such as vulcanizing agents, were added in a 120 second mix cycle at 220°C. Fourth, the composition undergoes a fourth mix cycle for 90 seconds at 220°C. Then the master batch rubber is inserted into the mixer with the curatives and mixed for 120 seconds at 180°C, followed by a final mix for 120 seconds at 180°C.

After the rubber drops from the mixer, the rubber is manually applied to a dual-roll mill and sheeted until the thickness is 0.75" - 1.25", according to ASTM B 947-06. The dual roller mill stage sheets and cools the mixed formulation.

The cure kinetics of the rubber formulations can be assessed according to ASTM D 2084-95 (cure study). Rheometry can be measured using a Monsanto RPA2000 for 45 minutes at 160°C.

The sheeted material is subjected to the cure press for vulcanization. Based on T90 values from the cure study, the sheeted material from the dual roller mill can be inserted into the cure press and vulcanized at 320°F for 45 minutes.

### Example 4. Inventive and Comparative Hose properties

The inventive barrier hose comprising a HNBR tube; PA66 barrier layer; EPDM backing layer; and Tensa filament polyester braid (reinforcement) cover layer, having an internal diameter (I.D.) of 0.43 in and outer diameter (O.D.) of 0.66 in, exhibited a working temperature range of -40 to 301°F, a working pressure of 500 psi, a permeation rating E85: 4.5 g/m²/day; Fuel C: 3.6 g/m²/day; a minimum bend radius of 2.50 in, a force to bend of 3.7 lbs, weight per foot of 0.09 lbs/ft; and was approved for fuels including E85, methanol, bio-diesels, and for Hot Water.

Inventive hose characteristics and comparative hose characteristics for Comparative hose A (Earl's Pro-Lite); Comparative hose B (Russel Pro-Classic); Comparative hose C (Fragola EX Street); and Comparative hose D (Gates Barricade) are shown in Table 4.

**Table 4. Inventive Barrier Hose and Comparative Hose Characteristics**

| Hose | General Constructi on | Nom ID/M ax OD | Worki ng Temp. Range | Worki ng Pressu re | Permeat ion Rate (g/m²/d ay) | Ben d Radi us | For ce to Ben d | Wt./ Ft. | Appro ved Fuels | SAE Rati ng |
|---|---|---|---|---|---|---|---|---|---|---|
| Inventive Hose | HNBR Tube; PA66 Barrier; EPDM Backing; Tensa Braid | 0.43 in/0.6 6 in | -40 to 301°F | 500 psi | E85: 4.5 g/m²/da y; | 2.50 in | 3.7 lbs | 0.09 lbs/ft | E85, methan ol & bio-diesels, Hot Water | Ref. J152 7 J30 R9 |
| | | | | | Fuel C: 3.6 g/m²/da y | | | | | |
| Compara tive Hose A | CPE Tube; Nylon Braid | 0.44 in/0.6 4 in | -40 to 301°F | 350 psi | E85: 14.4 g/m²/da y; | 3.00 in | 5.6 lbs | 0.13 lbs/ft | Fuel, Oil, Coolan t | N/A |
| | | | | | Fuel C: 12.7 g/m²/da y | | | | | |
| Compara tive Hose B | CPE Tube; Nylon Braid | 0.44 in/0.6 8 in | -40 to 301°F | 350 psi | E85: 18.4 g/m²/da y; | 3.00 in | 4.4 lbs | 0.13 lbs/ft | Fuel, Oil, AntiFreeze | N/A |
| | | | | | Fuel C: 16.8 g/m²/da y | | | | | |
| Compara tive Hose C | Nitrile Tube; Aramid Braid; Rubber Cover | 0. 50 in/0.7 4 in | -29 to 275°F | 175 psi | E85: 13.8 g/m²/da y; | 3.00 in | 5.5 lbs | 0.26 lbs/ft | E85, E98, methan ol & bio-diesels | 30R 9 |
| | | | | | Fuel C: 11.6 g/m²/da y | | | | | |
| Compara tive Hose D | HNBR Tube; Thermopl astic Barrier; Aramid Braid; CPE Cover | 0.50 in/0.7 5 in | -40 to 257°F | 225 psi | E85: 5.7 g/m²/da y; | 2.95 in | 5.8 lbs | 0.19 lbs/ft | E85, methan ol & bio-diesels, Hot Water | 30R 14 T2 |
| | | | | | Fuel C: 4.1 g/m²/da y | | | | | |

The inventive hose exhibited as broad a working temperature range (-40 to 301°F ) as Comparative hose A and Comparative hose B. The inventive hose exhibited a broader working temperature range than Comparative hose C (-29 to 275°F ) and Comparative hose D (-40 to 257°F). The inventive hose exhibited a substantially higher working pressure (500 psi) when compared to Comparative hose A (350 psi), Comparative hose B (350 psi), Comparative hose C (175 psi), and Comparative hose D (225 psi). The inventive hose exhibited improved permeation rating for E85 and Fuel C (E85: 4.5 g/m²/day; Fuel C: 3.6 g/m²/day ) compared to Comparative hose D (E85: 5.7 g/m²/day; Fuel C: 4.1 g/m²/day). The inventive hose exhibited substantially improved permeation rating for E85 and Fuel C compared to Comparative hose A (E85: 14.4 g/m²/day; Fuel C: 12.7 g/m²/day), Comparative hose B (E85: 18.4 g/m²/day; Fuel C: 16.8 g/m²/day), and Comparative hose C (E85: 13.8 g/m²/day; Fuel C: 11.6 g/m²/day).

The inventive hose exhibited greater flexibility than comparative hoses A, B, C, and D. The inventive hose exhibited a smaller bend radius (2.50 in) and a lower force to bend (3.7 lbs) than Comparative hose A, Comparative hose B, Comparative hose C, and Comparative hose D.

The inventive hose was lighter in weight (0.09 lbs/ft) than Comparative hose A (0.13 lbs/ft), Comparative hose B (0.13 lbs/ft), Comparative hose C (0.26 lbs/ft), or Comparative hose D (0.19 lbs/ft).

The inventive hose conforms to SAE J30R9 requirements for a fuel injection hose. The inventive hose conforms to SAE J1527 requirements for marine fuel hoses.

## Claims

1. A hose, comprising a multiplicity of layers including:
a hydrogenated nitrile butadiene (HNBR) rubber layer (102, 206) directly bonded to a polyamide (PA) barrier layer (104, 204),
wherein the HNBR rubber layer (102, 206) is prepared from a first composition comprising an HNBR rubber, a phenylenedimaleimide, and a maleated compound.

2. The hose of claim 1, wherein the HNBR layer is covalently bonded to the PA barrier layer (104, 204) without an intervening adhesive layer.

3. The hose of any one of the preceding claims, wherein the HNBR rubber is at least partially saturated having residual double bonds of no more than 6%, no more than 4%, no more than 2%, or no more than 1% by Infrared (IR) Spectroscopy.

4. The hose of any one of the preceding claims, wherein the phenylenedimaleimide is a N,N'-1,3-phenylenedimaleimide.

5. The hose of any one of the preceding claims, wherein the maleated compound is a maleated polybutadiene compound.

6. The hose of any one of the preceding claims, wherein the first composition comprises the maleated compound in a range of from 1-7 wt%, 2-6 wt%, 3-5 wt%, or 3.5-4.5 wt% compared to the total weight of the first composition.

7. The hose of any one of the preceding claims, wherein the first composition further comprises a plasticizer, wherein the plasticizer is a high molecular weight plasticizer (> 500 g/mol).

8. The hose of any one of the preceding claims, wherein the first composition comprises one or more fillers, wherein the one or more fillers is selected from the group consisting of carbon black, silica, silicates, talc, aluminum silicate, calcium carbonate, zinc oxide, titanium dioxide, and stearic acid, and
wherein the first composition comprises the one or more fillers in a total amount in a range of from 30-60 wt%, 35-55 wt%, or 35-45 wt% compared to the total weight of first composition.

9. The hose of any one of the preceding claims, wherein the first composition comprises:
a peroxide, wherein the peroxide is selected from the group consisting of dicumyl peroxide, di-t-butyl peroxide, and t-butyl cumyl peroxide,
and/or an antioxidant.

10. The hose of any one of the preceding claims, wherein the HNBR layer is an inner HNBR tube layer (102) or an HNBR backing layer (206).

11. The hose of any one of the preceding claims, wherein the vulcanized hose exhibits one or more of:
a working temperature range of from -40 to 149 °C (-40 to +301 deg F);
a maximum working pressure of at least 3.45 MPa (500 psi);
a burst rating of at least 4:1 under SAE J1527 burst test conditions;
does not exceed a permeation rating of 15 g or less of fuel loss per square meter of interior surface area in 24 hours, 15g/m²/24 h, with CE fuel at 23°C as specified in SAE J1527-B1;
does not exceed a permeation rating of 15 g or less of fuel loss per square meter of interior surface area in 24 hours, 15g/m²/24 h, with E85 fuel at 40°C as specified in SAE 30R9;
does not exceed a permeation rating of 15 g or less of fuel loss per square meter of interior surface area in 24 hours, 15g/m²/24 h, with fuel C at 40°C as specified in SAE 30R9;
exhibits a permeation rate of no more than 5g/m²/24 h, with E85 fuel;
exhibits a permeation rate of no more than 4g/m²/24 h, with fuel C;
conforms to SAE J30R9 requirements for a fuel injection hose; and
conforms to SAE J1527 requirements for a marine fuel hose.

12. The hose of any one of the preceding claims, comprising the following layers in a radial direction:
an inner HNBR tube layer (102) prepared from the first composition;
a polyamide barrier layer (104);
a rubber backing layer (106); and
a braided reinforcement cover layer (108).

13. The hose of any one of claims 1 to 11, comprising the following layers in a radial direction:
an inner polyamide veneer (204);
an HNBR rubber backing layer (206) prepared from the first composition;
a braided reinforcement layer (208); and
an outer rubber cover layer (210).

14. The hose of claim 12, wherein the rubber backing layer is an EPDM rubber backing layer (106) prepared from a second composition comprising a low ethylene EPDM rubber, a phenylenedimaleimide, and a maleated compound.

15. A method of making the hose of any one of claims 1 to 12 or of claim 15, the method comprising:
blending an HNBR rubber (304), a phenylenedimalemide (306), and a maleated compound (302) to prepare a first composition;
extruding the first composition onto a mandrel to form an HNBR inner tube layer (102);
extruding a polyamide composition over the HNBR inner tube layer (102) to form a barrier layer (104);
blending a second composition comprising an ethylene propylene diene monomer rubber (EPDM), a phenylenedimalemide, and a maleated compound;
extruding the second composition on top of the polyamide barrier layer (104) to form an EPDM rubber backing layer (106);
applying a textile braid reinforcement layer (108) over the EPDM rubber backing layer (106) to form a green hose;
vulcanizing the green hose; and
expelling the hose from the mandrel.

## Patentansprüche

1. Schlauch, umfassend eine Vielzahl von Schichten, eingeschlossen:
eine Hydriertes-Nitrilbutadien(HNBR)-Kautschukschicht (102, 206), die direkt an eine Polyamid(PA)-Barriereschicht (104, 204) gebunden ist,
wobei die HNBR-Kautschukschicht (102, 206) aus einer ersten Zusammensetzung umfassend einen HNBR-Kautschuk,
ein Phenylendimaleimid und eine maleierte Verbindung hergestellt ist.

2. Schlauch nach Anspruch 1, wobei die HNBR-Schicht ohne eine dazwischenliegende Klebstoffschicht kovalent an die PA-Barriereschicht (104, 204) gebunden ist.

3. Schlauch nach einem der vorstehenden Ansprüche, wobei der HNBR-Kautschuk wenigstens teilweise gesättigt ist mit restlichen Doppelbindungen von nicht mehr als 6 %, nicht mehr als 4 %, nicht mehr als 2 % oder nicht mehr als 1 % nach Infrarot(IR)-Spektroskopie.

4. Schlauch nach einem der vorstehenden Ansprüche, wobei das Phenylendimaleimid ein N,N'-1,3-Phenylendimaleimid ist.

5. Schlauch nach einem der vorstehenden Ansprüche, wobei die maleierte Verbindung eine maleierte Polybutadienverbindung ist.

6. Schlauch nach einem der vorstehenden Ansprüche, wobei die erste Zusammensetzung die maleierte Verbindung in einem Bereich von 1-7 Gew.-%, 2-6 Gew.-%, 3-5 Gew.-% oder 3,5-4,5 Gew.-% im Vergleich zu dem Gesamtgewicht der ersten Zusammensetzung umfasst.

7. Schlauch nach einem der vorstehenden Ansprüche, wobei die erste Zusammensetzung ferner einen Weichmacher umfasst, wobei der Weichmacher ein Weichmacher mit hohem Molekulargewicht (> 500 g/mol) ist.

8. Schlauch nach einem der vorstehenden Ansprüche, wobei die erste Zusammensetzung einen oder mehrere Füllstoffe umfasst, wobei der eine oder die mehreren Füllstoffe ausgewählt sind aus der Gruppe bestehend aus Ruß, Siliciumdioxid, Silicaten, Talkum, Aluminiumsilicat, Calciumcarbonat, Zinkoxid, Titandioxid und Stearinsäure, und
wobei die erste Zusammensetzung den einen oder die mehreren Füllstoffe in einer Gesamtmenge in einem Bereich von 30-60 Gew.-%, 35-55 Gew.-% oder 35-45 Gew.-% im Vergleich zu dem Gesamtgewicht der ersten Zusammensetzung umfasst.

9. Schlauch nach einem der vorstehenden Ansprüche, wobei die erste Zusammensetzung umfasst:
ein Peroxid, wobei das Peroxid ausgewählt ist aus der Gruppe bestehend aus Dicumylperoxid, Di-t-butylperoxid und t-Butylcumylperoxid, und/oder ein Antioxidationsmittel.

10. Schlauch nach einem der vorstehenden Ansprüche, wobei die HNBR-Schicht eine innere HNBR-Schlauchschicht (102) oder eine HNBR-Trägerschicht (206) ist.

11. Schlauch nach einem der vorstehenden Ansprüche, wobei der vulkanisierte Schlauch eines oder mehrere aufweist von:
einen Arbeitstemperaturbereich von -40 bis 149 °C (-40 bis +301 Grad F);
einen maximalen Arbeitsdruck von wenigstens 3,45 MPa (500 psi);
eine Berstbewertung von wenigstens 4:1 unter SAE J1527-Berstprüfungsbedingungen;
eine Permeationsbewertung von nicht über 15 g oder weniger an Kraftstoffverlust pro Quadratmeter Innenoberfläche in 24 Stunden, 15 g/m²/24 h, mit CE-Kraftstoff bei 23 °C nach SAE J1527-B1;
eine Permeationsbewertung von nicht über 15 g oder weniger an Kraftstoffverlust pro Quadratmeter Innenoberfläche in 24 Stunden, 15 g/m²/24 h, mit E85-Kraftstoff bei 40 °C nach SAE 30R9;
eine Permeationsbewertung von nicht über 15 g oder weniger an Kraftstoffverlust pro Quadratmeter Innenoberfläche in 24 Stunden, 15 g/m²/24 h, mit Kraftstoff C bei 40 °C nach SAE 30R9;
eine Permeationsrate von nicht mehr als 5 g/m²/24 h mit E85-Kraftstoff;
eine Permeationsrate von nicht mehr als 4 g/m²/24 h mit Kraftstoff C;
entspricht den SAE J30R9-Anforderungen für einen Kraftstoffeinspritzschlauch; und
entspricht den SAE J1527-Anforderungen für einen Schiffskraftstoffschlauch.

12. Schlauch nach einem der vorstehenden Ansprüche, umfassend die folgenden Schichten in einer radialen Richtung:
eine innere HNBR-Schlauchschicht (102), die aus der ersten Zusammensetzung hergestellt ist;
eine Polyamid-Barriereschicht (104);
eine Kautschuk-Trägerschicht (106); und
eine geflochtene Verstärkungs-Deckschicht (108).

13. Schlauch nach einem der Ansprüche 1 bis 11, umfassend die folgenden Schichten in einer radialen Richtung:
eine innere Polyamidverkleidung (204);
eine HNBR-Kautschuk-Trägerschicht (206), die aus der ersten Zusammensetzung hergestellt ist;
eine geflochtene Verstärkungsschicht (208) und
eine äußere Kautschuk-Deckschicht (210).

14. Schlauch nach Anspruch 12, wobei die Kautschuk-Trägerschicht eine EPDM-Kautschuk-Trägerschicht (106) ist, die aus einer zweiten Zusammensetzung hergestellt ist, die einen EPDM-Kautschuk mit niedrigem Ethylengehalt, ein Phenylendimaleimid und eine maleierte Verbindung umfasst.

15. Verfahren zur Herstellung des Schlauchs nach einem der Ansprüche 1 bis 12 oder nach Anspruch 15, wobei das Verfahren umfasst:
Mischen eines HNBR-Kautschuks (304), eines Phenylendimaleinimids (306) und einer maleierten Verbindung (302), um eine erste Zusammensetzung herzustellen;
Extrudieren der ersten Zusammensetzung auf einen Dorn, um eine HNBR-Innenschlauchschicht (102) zu bilden;
Extrudieren einer Polyamidzusammensetzung über die HNBR-Innenschlauchschicht (102), um eine Barriereschicht (104) zu bilden;
Mischen einer zweiten Zusammensetzung, die einen Ethylen-Propylen-Dien-Monomerkautschuk (EPDM), ein Phenylendimaleinimid und eine maleierte Verbindung umfasst;
Extrudieren der zweiten Zusammensetzung auf die Polyamid-Barriereschicht (104), um eine EPDM-Kautschuk-Trägerschicht (106) zu bilden;
Aufbringen einer Textilgeflecht-Verstärkungsschicht (108) über der EPDM-Kautschuk-Trägerschicht (106), um einen grünen Schlauch zu bilden;
Vulkanisieren des grünen Schlauchs; und
Ablösen des Schlauchs von dem Dorn.

## Revendications

1. Tuyau, comprenant une multiplicité de couches incluant :
une couche de caoutchouc nitrile butadiène hydrogéné (HNBR) (102, 206) directement liée à une couche barrière (104, 204) en polyamide (PA),
dans lequel la couche de caoutchouc HNBR (102, 206) est préparée à partir d'une première composition comprenant un caoutchouc HNBR, un phénylènedimaléimide, et un composé maléaté.

2. Tuyau selon la revendication 1, dans lequel la couche de HNBR est liée de manière covalente à la couche barrière de PA (104, 204) sans couche d'adhésif intermédiaire.

3. Tuyau selon l'une quelconque des revendications précédentes, dans lequel le caoutchouc HNBR est au moins partiellement saturé, ayant des doubles liaisons résiduelles non supérieures à 6 %, pas plus de 4 %, pas plus de 2 %, ou pas plus de 1 % par spectroscopie infrarouge (IR).

4. Tuyau selon l'une quelconque des revendications précédentes, dans lequel le phénylènedimaléimide est un N,N'-1,3-phénylènedimaléimide.

5. Tuyau selon l'une quelconque des revendications précédentes, dans lequel le composé maléaté est un composé polybutadiène maléaté.

6. Tuyau selon l'une quelconque des revendications précédentes, dans lequel la première composition comprend le composé maléaté dans une plage de 1-7 % en poids, 2-6 % en poids, 3-5 % en poids ou 3,5-4,5 % en poids par rapport au poids total de la première composition.

7. Tuyau selon l'une quelconque des revendications précédentes, dans lequel la première composition comprend en outre un plastifiant, dans lequel le plastifiant est un plastifiant à poids moléculaire élevé (> 500 g/mole).

8. Tuyau selon l'une quelconque des revendications précédentes, dans lequel la première composition comprend une ou plusieurs charges, dans lequel la ou les charges sont choisies dans le groupe constitué par le noir de carbone, la silice, les silicates, le talc, le silicate d'aluminium, le carbonate de calcium, l'oxyde de zinc, le dioxyde de titane, et l'acide stéarique, et
dans lequel la première composition comprend la ou les charges en une quantité totale dans une plage allant de 30-60 % en poids, 35-55 % en poids ou 35-45 % en poids par rapport au poids total de la première composition.

9. Tuyau selon l'une quelconque des revendications précédentes, la première composition comprenant :
un peroxyde, dans lequel le peroxyde est choisi dans le groupe constitué par le peroxyde de dicumyle, le peroxyde de di-t-butyle et le peroxyde de t-butyle et de cumyle, et/ou un antioxydant.

10. Tuyau selon l'une quelconque des revendications précédentes, dans lequel la couche de HNBR est une couche de tube de HNBR interne (102) ou une couche de support de HNBR (206).

11. Tuyau selon l'une quelconque des revendications précédentes, le tuyau vulcanisé présentant l'un ou plusieurs parmi :
une plage de température de travail de -40 à 149 °C (-40 à +301 deg F) ;
une pression de travail maximale d'au moins 3,45 MPa (500 psi) ;
un indice de rafale d'au moins 4:1 dans les conditions d'essai de rafale de la norme SAE J1527 ;
ne dépasse pas un indice de perméation de 15 g ou moins de perte de carburant par mètre carré de surface intérieure en 24 heures, 15 g/m²/24 h, avec du carburant CE à 23 °C comme spécifié dans la norme SAE J1527-B1 ;
ne dépasse pas un indice de perméation de 15 g ou moins de perte de carburant par mètre carré de surface intérieure en 24 heures, 15 g/m²/24 h, avec du carburant E85 à 40 °C comme spécifié dans la norme SAE 30R9 ;
ne dépasse pas un indice de perméation de 15 g ou moins de perte de carburant par mètre carré de surface intérieure en 24 heures, 15 g/m²/24 h, avec du carburant C à 40 °C comme spécifié dans la norme SAE 30R9 ;
présente un indice de perméation ne dépassant pas 5 g/m²/24 h, avec du carburant E85 ;
présente un indice de perméation ne dépassant pas 4 g/m²/24 h, avec le carburant C ;
est conforme aux exigences de la norme SAE J30R9 pour un tuyau d'injection de carburant ; et
est conforme aux exigences de la norme SAE J1527 pour un tuyau de carburant marin.

12. Tuyau selon l'une quelconque des revendications précédentes, comprenant les couches suivantes dans une direction radiale :
une couche de tube de HNBR interne (102) préparée à partir de la première composition ;
une couche barrière en polyamide (104) ;
une couche de support en caoutchouc (106) ; et
une couche de recouvrement de renforcement tressée (108).

13. Tuyau selon l'une quelconque des revendications 1 à 11, comprenant les couches suivantes dans une direction radiale :
un placage interne en polyamide (204) ;
une couche de support en caoutchouc HNBR (206) préparée à partir de la première composition ;
une couche de renforcement tressée (208) ; et
une couche de recouvrement de caoutchouc externe (210).

14. Tuyau selon la revendication 12, dans lequel la couche de support en caoutchouc est une couche de support en caoutchouc EPDM (106) préparée à partir d'une seconde composition comprenant un caoutchouc EPDM à faible teneur en éthylène, un phénylènedimaléimide et un composé maléaté.

15. Procédé de fabrication du tuyau selon l'une quelconque des revendications 1 à 12 ou de la revendication 15, le procédé comprenant :
mélanger un caoutchouc HNBR (304), un phénylènedimalemide (306) et un composé maléaté (302) pour préparer une première composition ;
extruder la première composition sur un mandrin pour former une couche de tube de HNBR interne (102) ;
extruder une composition de polyamide sur la couche de tube de HNBR interne (102) pour former une couche barrière (104) ;
mélanger une deuxième composition comprenant un caoutchouc de monomères d'éthylène-propylène-diène (EPDM), un phénylènedimalemide, et un composé maléaté ;
extruder la deuxième composition par-dessus la couche barrière de polyamide (104) pour former une couche de support en caoutchouc EPDM (106) ;
appliquer une couche de renforcement de tresse textile (108) sur la couche de support en caoutchouc EPDM (106) pour former un tuyau vert ;
vulcaniser le tuyau vert ; et
expulser le tuyau du mandrin.
